# EUROPÄISCHE PATENTSCHRIFT

(11) **EP 2 318 741 B1**
(45) Veröffentlichungstag und Bekanntmachung des Hinweises auf die Patenterteilung: **02.10.2013**
(21) Anmeldenummer: 09777442.6
(22) Anmeldetag: 27.07.2009
(51) Int. Cl.: F16K 7/17

(54) **MEMBRANENVENTIL, INSBESONDERE FÜR EIN ABS- ODER GLEITSCHUTZVENTIL**
MEMBRANE VALVE, PARTICULARLY FOR AN ABS OR SLIP PROTECTION VALVE
VANNE À MEMBRANE, EN PARTICULIER POUR UNE VANNE D'ABS OU D'ANTIPATINAGE

(30) Priorität: 30.07.2008 DE 102008035372
(43) Veröffentlichungstag der Anmeldung: 11.05.2011
(73) Patentinhaber: KNORR-BREMSE Systeme für Schienenfahrzeuge GmbH, 80809 München (DE)
(72) Erfinder: HESSLING, Thomas, 80799 München (DE)
(74) Vertreter: Schönmann, Kurt
(86) Internationale Anmeldenummer: PCT/EP2009/005407
(87) Internationale Veröffentlichungsnummer: WO 2010/012425

(56) Entgegenhaltungen:
- EP-A- 0 352 522
- EP-A- 0 439 303
- CH-A5- 686 051
- DE-A1- 1 911 380
- FR-A- 1 375 258
- FR-A- 2 146 485

## Beschreibung

Die vorliegende Erfindung betrifft ein Membranventil mit einer Elastomermembrane zur Betätigung eines Verschlussgliedes eines Ventilsitzes, welche über eine außenradiale Dichtwulst zwischen einem Ventilgehäuse und einem Gehäusedeckel angeordnet ist und durch eine seitens Gehäusedeckel ausgeformte Steuerdruckkammer beaufschlagbar ist, welche mit einer gewölbten Stützkontur versehen ist, an der die obere Membranfläche der Elastomermembrane im geöffneten Zustand des Verschlussgliedes flächig zur Anlage kommt.

Das Einsatzgebiet der vorliegenden Erfindung erstreckt sich vornehmlich auf ABS- oder Gleitschutzventile, welche bei pneumatisch betätigten Bremsanlagen von Fahrzeugen zum Einsatz kommen, um eine ABS- bzw. Gleitschutzfunktion zu realisieren. Derartige druckluftbetriebene Bremsanlagen werden schwerpunktmäßig bei Nutzfahrzeugen oder Schienenfahrzeugen eingesetzt, um die relativ hohen bewegten Massen effizient und sicher zu bremsen.

Aus der DE 33 45 080 A1 geht ein gattungsgemäßes Membranventil hervor, welches für druckluftgebremste Fahrzeuge als Gleitschutzventil zum Einsatz kommt. Das Gleitschutzventil besteht im Wesentlichen aus einem in eine Leitungsverbindung zwischen einer Druckquelle zu einem Bremszylinder angeordneten Absperrventil, welches vorgesteuert durch eine Elastomermembran schaltbar ist. In Ventilschließrichtung wirkt ein Vorsteuerventil sowie zusätzlich die Kraft einer Schließfeder. In Ventilöffnungsrichtung wird die Elastomermembran ständig vom Druck der Druckquelle beaufschlagt, so dass eine Normal-Offen-Ventilfunktion realisiert ist. Das Gleitschutzventil ist hier als Doppelmembranventil ausgeführt und umfasst insoweit zwei Elastomermembrane, je zum Belüften oder Entlüften des zum Bremszylinder hinführenden Arbeitsanschlusses.

### LK:

Jede Elastomermembran ist zwischen einem Ventilgehäuse und einem Gehäusedeckel angeordnet, wobei eine außenradiale Dichtwulst die Elastomermembrane in der Montageposition fixiert. Im geöffneten Zustand des Ventilsitzes legt sich die Elastomermembrane an eine gewölbte Stützkontur seitens des Gehäusedeckels an. Die Stützkontur bildet dabei einen Endanschlag des Verschlussgliedes für den Ventilsitz im geöffneten Zustand. Die gewölbte Stützkontur soll eine möglichst flächige Anlage der oberen Membranfläche an den Gehäusedeckel sicherstellen, damit eine gleichmäßige Unterstützung stattfindet. Eine gleichmäßige Unterstützung ist Voraussetzung dafür, dass die Elastomermembran möglichst viele Wechselbeanspruchungen unterliegende Schaltvorgänge auszuführen in der Lage ist, bis verschleißbedingt eine fortschreitende Rissbildung einsetzt, welche schließlich einen Austausch der Elastomermembrane erfordert.

Problematisch sind bei derartigen Membranventilen extreme Einsatzbedingungen, welche die Materialermüdung beschleunigen. Insbesondere sehr tiefe Temperaturen von bis zu -50°C führen zu einem vorzeitigen Verschleiß der Elastomermembrane.

Membraneventile dieser Art sind aus dem Dokument DE 1911380 bekannt.

Es ist daher die Aufgabe der vorliegenden Erfindung, ein als Gleitschutzventil einsetzbares Membranventil zu schaffen, welches mit einfachen technischen Mitteln extremen Temperaturbeanspruchungen standhält.

Die Aufgabe wird ausgehend von einem Membranventil gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass die gewölbte Stützkontur des Gehäusedeckels direkt am Übergang der Dichtwulst und der Membranfläche beginnt und sich im Längsschnitt nach radial innen kantenfrei bis zum Rand einer zentralen Anschlussausnehmung für den Steuerdruck erstreckt.

Mit anderen Worten bedeutet dies, dass die gewölbte Stützkontur für die Elastomermembran so geformt ist, dass sich die Elastomermembrane beim Öffnen des Ventilsitzes am Übergang des Dichtwulstes in die Membranfläche und an den weiteren Verlauf nach radial innen vorhandenen Radien krümmt, um den Offenstellungshub zu erreichen. In dieser Endlagenposition liegt die Elastomermembran schließlich in der gesamten Stützkontur des Gehäusedeckels gleichmäßig an, ohne sich dabei signifikant in Längsrichtung zu dehnen.

Dies führt zu dem Vorteil, dass die Elastomermembran während des Schaltbetriebes einer weit aus geringeren Belastung ausgesetzt ist, was insbesondere bei niedrigen Temperaturen zu einer längeren Lebensdauer führt. Da die Stützkontur für die Membranfläche bereits an der Dichtwulst anfängt, steht im Vergleich zum Stand der Technik eine größere Wirkfläche für die Steuerdruckbeaufschlagung zur Verfügung, so dass die Baugröße der Elastomermembran insgesamt verkleinert werden kann oder bei gleicher Baugröße im Vergleich zu herkömmlichen Elastomermembranen eine geringere Änderung des Steuerdrucks erforderlich ist. Hieraus folgt, das geringere Betätigungskräfte für das Schalten erforderlich sind und sich der Einsatzbereich zu tieferen Temperaturen hin erweitert. Versuche haben ergeben, dass eine hinreichende Lebensdauer bis zu einer Temperatur von -55°C erzielbar ist.

Vorzugsweise sollte die gewölbte Stützkontur, ausgehend von einer die Dichtwulst der Elastomermembran aufnehmenden ringförmigen Ausnehmung im Gehäusedeckel Radien aufweisen, die mit den entsprechenden Radien der Membran in der Lage und Maßen korrespondieren, um ein gleichmäßiges Anschmiegen der Elastomermembrane in der Offenstellung bei möglichst geringer Biegebeanspruchung zu erzielen.

Gemäß einer die Erfindung verbessernden Maßnahme wird vorgeschlagen, zumindest die obere Membranfläche der Elastomermembrane mit mehreren beabstandet voneinander angeordneten noppenartigen Anformungen auszustatten. Die noppenartigen Anformungen verhindern ein Ankleben und Beschädigungen der wechselbeanspruchten Elastomermembran und dienen als zusätzliche Endanschlagdämpfung. Derartige noppenartige Anformungen können bei Bedarf auch an der unteren Membranfläche der Elastomermembrane angeordnet werden.

Gemäß der Erfindung, werden die untere Membranfläche der Elastomermembrane durch eine ringartige Stützkontur im Endanschlag begrenzt. Die ringartige Stützkontur werden dabei durch einen formschlüssig seitens des Ventilgehäuses eingelegten Stützring gebildet. Der Stützring wird vor der Montage der Elastomermembrane in einen korrespondierenden Randabsatz seitens des Ventilgehäuses eingelegt, und beim Anschrauben des Gehäusedeckels gemeinsam mit der Elastomermembrane verspannt, so dass eine zuverlässige Befestigung im montierten Zustand erzielt wird. Bei Demontage des Ventildeckels lässt sich der Stützring leicht entnehmen und die darunter liegende Ventilmechanik ist in einfacher Weise zugänglich.

Das auf den Ventilsitz, welcher der Elastomermembran zugeordnet ist, einwirkende Verschlussglied ist vorzugsweise stangenförmig ausgebildet. An Stelle eines stangenförmigen Verschlussgliedes ist es auch möglich, dass die Elastomermembrane selbst über einen verdickten Mittelbereich direkt als Verschlussglied wirkend mit dem Ventilsitz korrespondiert. Wird jedoch ein separates, vorzugsweise stangenförmiges Verschlussglied verwendet, so wird gemäß einer die Erfindung verbessernden Maßnahme vorgeschlagen, dieses endseitig in den Mittelbereich der Elastomermembrane über einen hieran angeformten Tellerabschnitt einzuknöpfen.

Gemäß einer anderen die Erfindung verbessernden Maßnahme wird vorgeschlagen, dass die Elastomermembrane mit der außenradialen Dichtwulst eine statische Gehäusedichtung zwischen dem Ventilgehäuse und dem Gehäusedeckel bildet. Hierdurch kann auf eine separate Gehäusedichtung verzichtet werden. Die Ventilwulst übernimmt insofern neben der Funktion der Lagefixierung der Elastomermembrane auch die Gehäuseabdichtung.

Weitere, die Erfindung verbessernde Maßnahmen werden nachstehend gemeinsam mit der Beschreibung der Erfindung anhand eines Ausführungsbeispiels näher dargestellt. Es zeigt:
- Figur 1: ein teilweise Längsschnitt im Bereich der Steuerdruckkammer eines Gleitschutzventils des Standes der Technik, und
- Figur 2: einen teilweise Längsschnitt im Bereich der Steuerdruckkammer eines Gleitschutzventils gemäß der erfindungsgemäßen Lösung.

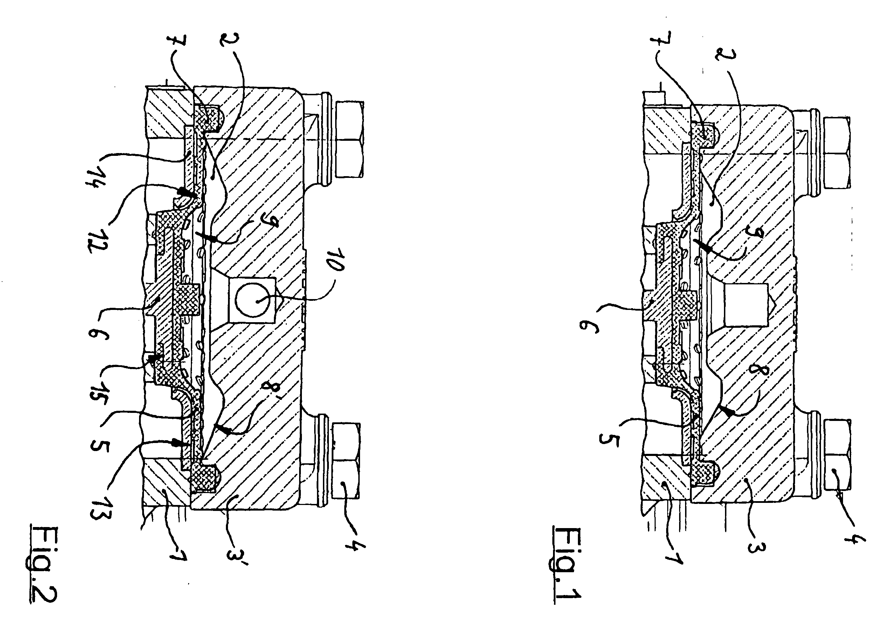

Gemäß Figur 1 - welche den Stand der Technik illustriert - umfasst das bekannte Membranventil ein Ventilgehäuse 1, das im Bereich der Steuerdruckkammer 2 mit einem Gehäusedeckel 3 per Schrauben 4 lösbar verbunden ist. Zwischen dem Ventilgehäuse 1 und dem Gehäusedeckel 3 ist eine Elastomermembrane 5 zur Betätigung eines hiervon angetriebenen Verschlussgliedes 6 angeordnet. Das Verschlussglied 6 betätigt den Ventilsitz 16 des Membranventils.

Die Elastomermembrane 5 verfügt über eine außenradiale Dichtwulst 7, welche in eine korrespondierende ringförmige Ausnehmung seitens des Gehäusedeckels 3 hinein ragt, um die Elastomermembrane 5 in ihrer Lage zu fixieren, sowie eine Gehäuseabdichtung zwischen Ventilgehäuse 1 und Gehäusedeckel 3 zu realisieren.

Die Steuerdruckkammer 2 ist mit einer gewölbten Stützkontur 8 versehen, an die die obere Membranfläche 9 der Elastomermembrane 5 im geöffneten Zustand des Verschlussgliedes 6 zur Anlage kommt. Bei dem hier gezeigten Stand der Technik nimmt die gewölbte Stützkontur 8 nur den inneren Teil der Membranfläche 9 ein, so dass insbesondere bei tiefen Betriebstemperaturen aufgrund der Wechselbeanspruchung ein hoher Materialverschleiß eintritt.

Gemäß Figur 2 kann dies verhindert werden, in dem erfindungsgemäß eine gewölbte Stützkontur 8' des Gehäusedeckels 3' direkt am Übergang zwischen der Dichtwulst 7 und der Membranfläche 9 - also im Kantenbereich - beginnt und sich nach radial innen hin kantenfrei bis zum R and einer zentralen Anschlussausnehmung 10 erstreckt. Die Anschlussausnehmung 10 dient dem Anschluss einer - nicht weiter dargestellten - Druckleitung zur Zuführung des Steuerdrucks für das Membranventil. Die so gewölbte Stützkontur 8' weist Mindestradien von hier ca. 5mm auf, um entlang der gesamten Anlagefläche möglichst geringe Materialbiegungen zu erzeugen. Zur verbesserten Anschlagdämpfung weist die obere Membranfläche 9 der Elastomermembrane 5 mehrere beabstandet voneinander angeordnete noppenartige Anformungen 11 auf. Seitens der unteren Membranfläche 12 der Elastomermembrane 5 ist eine ringartige Stützkontur 13 vorgesehen, welche an dieser Stelle durch einen formschlüssig seitens des Ventilgehäuses 1 eingelegten Stützring 14 gebildet ist. Der Stützring 14 ist ein Stanzbiegeteil aus Metallblech. Im Bereich der unteren Membranfläche 12 der Elastomermembrane 5 ist das Verschlussglied 6 über einen endseitig angeformten Tellerabschnitt 15 eingeknöpft.

Die Erfindung ist nicht beschränkt auf das vorstehend beschriebene bevorzugten Ausführungsbeispiel. Es sind vielmehr auch Abwandlungen hiervon denkbar, welchem vom Schutzbereich der nachfolgenden Ansprüche mit umfasst sind. So ist beispielsweise auch denkbar, dass über ein solches Membranventil nicht nur ein Ventilsitz sondern mehrere Ventilsitze betätigt werden.

### Bezugszeichenliste

- 1: Ventilgehäuse
- 2: Steuerdruckkammer
- 3: Gehäusedeckel
- 4: Schraube
- 5: Elastomermembrane
- 6: Verschlussglied
- 7: Dichtwulst
- 8: gewölbte Stützkontur
- 9: Membranfläche
- 10: Anschlussausnehmung
- 11: noppenartige Anformung
- 12: untere Membranfläche
- 13: Stützkontur
- 14: Stützring
- 15: Tellerabschnitt
- 16: Ventilsitz

## Patentansprüche

1. Membranenventil mit einer Elastomermembrane (5) zur Betätigung eines Verschlussgliedes (6) eines Ventilsitzes, welche über eine außenradiale Dichtwulst (7) zwischen einem Ventilgehäuse (1) und einem Gehäusedeckel (3) angeordnet ist und durch eine seitens des Gehäusedeckels (3) ausgeformten Steuerdruckkammer (2) beaufschlagbar ist, welche mit einer gewölbten Stützkontur (8) versehen ist, an der die obere Membranfläche (9) der Elastomermembrane (5) im geöffneten Zustand des Verschlussgliedes (6) flächig zur Anlage kommt, wobei die gewölbte Stützkontur (8') des Gehäusedeckels (3') direkt am Übergang zwischen der Dichtwulst (7) und der Membranfläche (9) beginnt und sich im Längsschnitt nach Radialinnen kantenfrei bis hin zum Rand einer zentralen Anschlussausnehmung (10) für den Steuerdruck erstreckt,
**dadurch gekennzeichnet, dass** seitens der unteren Membranfläche (12) der Elastomermembrane (5) eine ringartige Stützkontur (13) vorgesehen ist, die durch einen formschlüssig seitens des Ventilgehäuses (1) eingelegten Stützring (14) gebildet ist.

2. Membranventil nach Anspruch 1,
**dadurch gekennzeichnet, dass** die gewölbte Stützkontur (8') im Gehäusedeckel (3') Radien aufweist, die mit den entsprechenden Radien der Elastomermembrane (5) in der Lage und Maßen korrespondieren.

3. Membranventil nach Anspruch 1,
**dadurch gekennzeichnet, dass** zumindest die obere Membranfläche (9) der Elastomermembrane (5) mehrere beabstandet voneinander angeordnete noppenartige Anformungen (11) aufweist.

4. Membranventil nach Anspruch 1,
**dadurch gekennzeichnet, dass** das Verschlussglied (6) stangenförmig ausgebildet ist.

5. Membranventil nach Anspruch 1,
**dadurch gekennzeichnet, dass** das Verschlussglied (6) einen endseitig in den Mittelbereich der Elastomermembrane (5) eingeknöpften Tellerabschnitt (15) aufweist.

6. Membranventil nach einem der vorstehenden Ansprüche,
**dadurch gekennzeichnet, dass** die Elastomermembrane (5) mit der außenradialen Dichtwulst (7) eine statische Gehäusedichtung zwischen dem Ventilgehäuse (1) und dem Gehäusedeckel (3) bildet.

7. Membranventil nach einem der vorstehenden Ansprüche,
**dadurch gekennzeichnet, dass** der Gehäusedeckel (3) über mehrere Schrauben (4) lösbar am Ventilgehäuse (1) befestigt ist.

8. Gleitschutzventil einer druckluftbetätigten Bremsanlage eines Nutz- oder Schienenfahrzeuges, welches als ein Membranventil nach einem der vorstehenden Ansprüche ausgeführt ist.

## Claims

1. Diaphragm valve provided with an elastomer diaphragm (5) for operating a closing element (6) of a valve seat, which is disposed via a radially exterior sealing bead (7) between a valve housing (1) and a housing cover (3) and which is adapted for being controlled by means of a pressurised control chamber (2) formed on the side of said housing cover (3), which chamber is provided with an arched supporting contour (8), against which comes to rest the upper surface of said diaphragm (9) of said surface elastomer diaphragm (5) in the opened state of said closing element (6) in a planar manner, with said arched supporting contour (8') of said housing cover (3') beginning directly at the transition between said sealing bead (7) and said diaphragm surface (9) and extending, without an edge, up to the border of a connecting recess (10) for the control pressure, when seen radially towards the inside in a longitudinal section,
**characterised in that** a ring-like supporting contour (13) is formed on the side of the lower diaphragm surface (12) of said elastomer diaphragm (5), which is constituted by a supporting ring (14) positively inserted on the side of said valve housing (1).

2. Diaphragm valve according to Claim 1,
**characterised in that** said arched supporting contour (8') in said housing cover (3') presents radii corresponding to the respective radii of said elastomer diaphragm (5) in terms of their position and their dimensions.

3. Diaphragm valve according to Claim 1,
**characterised in that** at least said upper diaphragm surface (9) of said elastomer diaphragm (5) comprises several integrally moulded nub-like parts spaced from each other.

4. Diaphragm valve according to Claim 1,
**characterised in that** said closing element (6) has a rod-shaped configuration.

5. Diaphragm valve according to Claim 1,
**characterised in that** said closing element (6) comprises a disc-shaped section (15) buttoned into the central region of said elastomer diaphragm (5) on the end side.

6. Diaphragm valve according to any of the preceding Claims,
**characterised in that** said elastomer diaphragm (5) constitutes, together with said radially exterior sealing bead (7), a static housing seal between said valve housing (1) and said housing cover (3).

7. Diaphragm valve according to any of the preceding Claims,
**characterised in that** said housing cover (3) is detachably fastened by means of a plurality of screws (4) to said valve housing (1).

8. Wheel slip protection valve of a braking system operated by compressed air of a commercial or rail vehicle, which is designed as a diaphragm valve according to any of the preceding Claims.

## Revendications

1. Vanne à membrane à une membrane élastomère (5) pour la commande d'un élément de fermeture (6) d'une siège de soupape, qui est disposée via un boudin d'étanchéité radialement extérieur (7) entre un boîtier de soupape (1) et un couvercle de boîtier (3) et est apte à être commandé moyennant une chambre de pression de commande (2) formée du côté dudit couvercle de boîtier (3), cette chambre étant munie d'un contour de support en voûte (8), auquel porte la surface supérieure de la membrane (9) de ladite membrane élastomère (5) en étant ouvert dudit élément de fermeture (6) de manière plane, audit contour de support en voûte (8') dudit couvercle de boîtier (3') commençant directement à la transition entre ledit boudin d'étanchéité (7) et ladite surface de membrane (9) et s'étendant, sans arête, jusqu'au bord d'un évidement de raccord (10) pour la pression de commande, vue en coupe longitudinale radialement vers l'intérieur,
**caractérisée en ce qu'**un contour de support (13) en anneau set formé du côté de la surface de membrane inférieure (12) de ladite membrane élastomère (5), qui est constitué par un anneau de support (14) inséré, de façon positive, du côté dudit boîtier de soupape 81).

2. Vanne à membrane selon la revendication 1,
**caractérisée en ce que** ledit contour de support en voûte (8') dans ledit couvercle de boîtier (3') présente des rayons qui correspondent aux rayons respectifs de ladite membrane élastomère (5) en ce qui concerne leur position et leurs dimensions.

3. Vanne à membrane selon la revendication 1,
**caractérisée en ce qu'**au moins ladite surface de membrane supérieure (9) de ladite membrane élastomère (5) comprend plusieurs saillies y formées en bouton aux écarts l'un de l'autre.

4. Vanne à membrane selon la revendication 1,
**caractérisée en ce que** ledit élément de fermeture (6) a une configuration en tige.

5. Vanne à membrane selon la revendication 1,
**caractérisée en ce que** ledit élément de fermeture (6) comprend une partie en disque (15) boutonnée, du côté d'extrémité, dans la zone centrale de ladite membrane élastomère (5).

6. Vanne à membrane selon une quelconque des revendications précédentes,
**caractérisée en ce que** ladite membrane élastomère (5) constitue, ensemble avec ledit boudin d'étanchéité radialement extérieur (7), un joint d'étanchéité statique du boîtier entre ledit boîtier de soupape (1) et ledit couvercle de boîtier (3).

7. Vanne à membrane selon une quelconque des revendications précédentes,
**caractérisée en ce que** ledit couvercle de boîtier (3) est fixé de façon détachable moyennant d'une pluralité de vis (4) audit boîtier de soupape (1).

8. Vanne d'antipatinage d'un système de freinage commandé par air comprimé d'un véhicule utilitaire ou ferroviaire, qui est configuré sous forme d'une vanne à membrane selon une quelconque des revendications précédentes.
